# EUROPEAN PATENT APPLICATION

(11) **EP 4 538 803 A1**
(43) Date of publication of application: **16.04.2025**
(21) Application number: 24204417.0
(22) Date of filing: 03.10.2024
(51) Int. Cl.: G03H 1/08, G03H 1/22, G03H 1/26, G03H 1/30

(54) **HOLOGRAM CALCULATION METHOD**

(30) Priority: 09.10.2023 GB 202315451
(71) Applicant: Envisics Ltd, Milton Keynes MK1 1PT (GB)
(72) Inventor: HAWKER, Sam, Milton Keynes MK1 1PT (GB); SMEETON, Timothy, Milton Keynes MK1 1PT (GB); CRESPEL, Thomas, Milton Keynes MK1 1PT (GB)
(74) Representative: Greenaway, Martin William

(57) **Abstract**

There is provided a hologram engine for calculating a hologram of a target picture for displaying on a display device of an optical system. The target picture comprises a plurality of image points. Each image point is defined by a light-ray path therefrom to an entrance pupil of a viewer. Each light-ray path makes an angle with the display device. The hologram engine is arranged to determine a first sub-hologram of a first subset of the image points of the target picture by, for each image point of the first subset: a) propagating a wave along a propagation path that makes an angle with the display device that is reduced relative to the angle made by the respective light-ray path; and b) determining a contribution of the wave at the display device for each image point of the first subset.

## Description

### FIELD

The present disclosure relates to a hologram engine for calculating a hologram and a corresponding method. More specifically, the present disclosure relates a hologram engine for calculating a hologram using a modified point cloud method. Even more specifically, the present disclosure relates to a hologram engine for calculating a hologram be reducing the angle of a propagation path along which waves are propagated. Some embodiments relate to a holographic projector, picture generating unit or head-up display.

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device.

The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

### SUMMARY

Aspects of the present disclosure are defined in the appended independent claims.

In general terms, there is provided a hologram engine for calculating a hologram of a target picture in a counter-intuitive but computationally efficient manner.

The hologram engine according to the present disclosure is arranged to calculate a hologram of a target picture comprising a plurality of image points. The term "hologram engine" therefore refers to a system - e.g. compute system or hologram calculator or data processor or image processor - arranged to determine a hologram of an image. The system may comprise memory arranged to store the hologram and means for retrieving the hologram based on the image. The system may comprise a compute chip or processor arranged to calculate the hologram from the image e.g. using an algorithm and/or logic circuitry. The input to the hologram engine is an image and the output is a hologram of the image. The "hologram engine" may be embodied as a field programmable gate array or application-specific integrated circuit. The hologram engine - more specifically, the algorithm or logic circuit thereof - is arranged to do this by virtually / computationally propagating waves (also referred to herein as "wavelets") associated with each image point along a propagation path and then determining the contribution of the propagated wave(s) at a display device. Based on the determined / simulated contribution at the display device for each image point, a hologram can be calculated. For example, an array of complex amplitude values of the wave at the intersection of the wave and the display device may be determined. From this, a hologram may be calculated which, when suitably illuminated, spatially modulates light incident thereon to form a holographic wavefront that may reconstruct the or each image point. In the calculation of a phase-only hologram, an array of phase values for pixels of the display device may be determined. The hologram engine according to the present disclosure may be described as a point-cloud approach to hologram calculation. Point-cloud hologram calculation methods are known. However, the hologram engine according to the present disclosure is arranged to calculate the hologram in a very unconventional and counterintuitive manner. In particular, the inventors have developed a hologram calculation method in which the respective propagation path for each image point of at least a subset of the image points of the target image is modified (for example, reduced).

Conventionally, a point-cloud hologram calculation may comprise virtually propagating a wave from each image point to the centre of an entrance pupil of a viewer (in a viewing window of an optical system comprising the display device). In other words, conventionally, the wave may be propagated along a light-ray path defined between the image point and the centre of the entrance pupil. The hologram calculation is then based on the properties (contribution) of the wave propagated along this light-ray path at the display device. The propagated wave will intersect the display device at an angle that depends on the position of the centre of entrance pupil and the respective image point. When the calculated hologram is suitably illuminated, a holographic wavefront will be formed that propagates in a way that reconstructs the simulated / propagated wave such that the respective image point is holographically reconstructed to appear at the intended location (defined in the original target picture). In other words, conventionally, if the propagated wave intersected the display device at a particular angle, the holographically reconstructed point will appear at a position in a field of view of a system comprising the display device that depends on that angle, provided that angle falls within the field of view of the display device. The field of view is typically determined by (at least): a) a wavelength of light used to illuminate the display device; and b) a pitch of the pixels of the display device (i.e. a distance between the centres of adjacent pixels). The smaller the pitch, the larger the field of view. The display device may only be able to holographically reconstruct image points within the angular range of said field of view.

After thorough simulation and experimentation, the inventors have found that significant advantages, in particular computational efficiencies, can be achieved by modifying the hologram calculation method so that each wave is propagated along a propagation path that has been modified or selected to make a reduced angle with the display device. In other words, the angle made by the propagation path and the display device may be less than the angle made by the light-ray path and the display device. For example, each propagation path may be selected to pass through the display device substantially normally (i.e. substantially perpendicularly or substantially parallel to a normal of the display device). Said modification may effectively result in the wave(s) being propagated as if their associated image points have been translated or otherwise shifted or moved from the position or positions originally defined in the target picture. For example, the propagation path(s) may have been modified as if the image point or points have been translated or otherwise shifted or moved closer to the centre of the target picture (or closer to a field of view of the system). In some examples, the propagation path(s) may have been modified as if the image point or points have been translated or otherwise shifted or moved to be substantially at the centre of the target picture (or substantially at a field of view of the system). This may be the case when each propagation axis has been modified to be substantially normal to the display device. Another way of describing this effect is to say that the starting point of the (modified) propagation path is no longer the respective image point in the target picture (as is the case conventionally). Without further processing steps, a hologram calculated using the described modified propagation paths may result in the holographic reconstruction of the target picture appearing as if the image points are located substantially centrally in the field of view, likely overlapping one another. This may not be an accurate reconstruction of the target picture, which may comprise image points distributed over a range of angles of a field of view (not simply clustered centrally). In other words, significant amounts of positional information (which is conventionally encoded in the hologram calculation at the wave propagation stage) is lost in the modified calculation method according to the present disclosure. On the face of it, this approach is very counterintuitive.

However, the inventors have recognised that it is particularly advantageous for the wave or waves of the hologram calculation method to be propagated along a propagation path that makes a reduced angle with the display device (e.g. is substantially normal to the display device). The inventors have found that the hologram calculation can be made significantly more efficient when the propagation paths are modified in this way. For example, the inventors have recognised that the spatial frequency of a hologram of an image point towards the edge of a field of view of a system comprising the display device is higher than the spatial frequency of a hologram of an image point towards the centre of the field of view. Generally, the spatial frequency of a hologram of an image point decreases as the image point approaches the centre of the field of view (such that the angle made by a path from the display device to the image point is relatively small, approaching zero). The spatial frequency may refer to the frequency of the complex amplitudes at the display device. In a phase-only hologram, a hologram of a point having a relatively high spatial frequency may have a rapidly changing phase. For example, the phase of adjacent pixels of a display device displaying the hologram may change by close to pi. A hologram of a point having a relatively low spatial frequency may have a relatively slowly changing phase. For example, the phase of adjacent pixels of the display device displaying the hologram may change by a relatively small fraction of pi. The inventors have recognised that, by calculating a hologram using modified propagation paths for image points as described above, the spatial frequency of the hologram of those image points may be substantially reduced. Importantly, the inventors have recognised that this enables the initial hologram calculation to be performed at a lower resolution. For example, the complex amplitude / phase at the display device may be sampled for a fraction of the pixels of the display device. The inventors have recognised that, when the spatial frequency is relatively low, values for the pixels between sampled pixels may be filled in using interpolation. The inventors have recognised that under-sampling and interpolation is not possible when the spatial frequency is relatively high because the phase / complex amplitude values at the display device may be so fast changing that interpolation may be (very) inaccurate and result in (significant) aliasing issues. The modified propagation paths described above enable the under-sampling and interpolation approach.

The inventors have found that Interpolation is less computationally expensive than the initial hologram calculation such that said under-sampling significantly increases the computational speed and efficiency of the hologram calculation. For example, the inventors have achieved a five times increase in computational efficiency compared to conventional point cloud techniques. Memory requirements are also significantly reduced.

As the skilled reader will appreciate, it is generally desirable to reduce the computational cost of hologram calculations (or to increase the computational efficiency). This is particularly important in order to achieve real-time hologram calculation at a good quality image resolution. In the context of holographic projectors, such as for head-up displays in vehicles, it is particularly advantageous to be able to achieve this real-time hologram calculation with as little computation power as possible. The hologram calculation method according to the present disclosure contributes to achieving this real-time holography.

As described above, the modified propagation paths have the effect of calculating the hologram as if the image points have been translated. Thus, further processing may be required after the initial hologram calculation in order to return the image points to their correct position (i.e. further processing after the propagation and contribution determination steps). The inventors have recognised that this further processing can be quickly and simply achieved using appropriate phase-ramp / gradient functions arranged to compensate for the change in position of image points caused by the modified propagation paths. The use of phase-ramp or gradient functions to translate image points (by applying an angular "kick" to light incident on a display device displaying the function) will be familiar to the skilled person. In some embodiments, two phase-ramps may be used. For example, a first phase ramp function may be used to compensate for the propagation path modification in a first dimension (e.g. an x-dimension) and a second phase ramp function may be used to compensate for the propagation path modification in a second dimension (e.g. a y-direction). Furthermore, the inventors have recognised that subsets of image points may treated as a group in the hologram calculation. The propagation path for the image points within a subset may be modified by the same angle (in both x and y, for example). A sub-hologram of the image points within the subset may be calculated using each of the modified propagation paths. One or more phase-ramp functions may then be applied to the sub-hologram. Thus, the one or more phase-ramp functions may have the effect of compensating for the modified propagation path of all image points within the subset at once. (Rather than individually applying different phase-ramp functions to each image point individually). The hologram calculation method may iterate through a plurality of subsets of the sub-hologram and repeat the process using appropriate phase-ramp functions such that a reconstruction is effectively pieced together using the phase-ramp functions. In other words, different phase-ramp functions may be applied to different subsets of image points, but within a subset of image points the same phase-ramp function or functions may be applied.

While it may appear unconventional and complicated to remove positional / angular information of points in the hologram compute and compensate for this using phase-ramp functions (pushing the points back to their original positions), the inventors have found that the increased computational efficiency of the hologram compute achieved when the propagation paths are modified to make a reduced angle with the display device significantly outweighs the apparent increase in complexity.

According to a first aspect, there is provided a hologram engine. The hologram engine is for calculating a hologram of a target picture for displaying on a display device of an optical system. The target picture comprises a plurality of image points. Each image point is defined or definable by a first path. The first path or light-ray path for each image point extends from the image point to an entrance pupil of a viewer (for example, to the centre of the entrance pupil of a viewer). Each first path or light-ray path may be described as being ray-traceable between the respective image point and the entrance pupil. Each first path or light-ray path may be described as connecting or linking the respective image point and the entrance pupil. Each first path or light-ray path (of each image point) makes an angle with the display device of the optical system. In other words, the first path or light-ray path may correspond to the propagation path (or second path) of conventional point cloud hologram calculation methods described above. However, the hologram engine does not propagate waves along the light-ray paths. Instead, the hologram engine is arranged to determine a first sub-hologram of a first subset of the image points of the target picture by, for each image point of the first subset: a) propagating a wave along a second or propagation path that makes an angle with the display device that is reduced relative to the angle made by the respective first or light-ray path; and b) determining a contribution of the wave (characterizing the image point) at the display device for each image point of the first subset. The second or propagation path making a reduced with the display device means that the angle made by the second or propagation path and the display device is less than an angle made by the first or light-ray path and the display device. As described above, propagating the wave (for each image point of the first subset) along a propagation path making a reduced angle with the display device (rather than the light-ray path to the entrance pupil) allows for a much more computationally efficient hologram calculation. This is because the spatial frequency of the calculated hologram may be relatively low. This allows, for example, for the hologram to initially be under-sampled (e.g. calculated at a lower resolution than the native resolution of the display device). A full resolution hologram can be achieved using interpolation.

The hologram engine may be arranged to determine or form a hologram of the target picture. The determined or formed hologram may comprise the first sub-hologram. As described in more detailed below, the hologram engine may be arranged to combine further sub-holograms with the first sub-hologram as part of determining or forming the hologram. The hologram engine may be arranged to output, display, or store the hologram of the target picture.

The hologram engine may be arranged to display the hologram on display device, such as a spatial light modulator. In some embodiments, the hologram engine may comprise the display device. In some embodiments, the display device may be external to the hologram engine. The hologram is arranged such that, when the hologram is displayed on a display device and suitably illuminated, the first subset of image points of the target picture may be holographically reconstructed.

The hologram engine may be arranged to store the (determined or formed) hologram in a memory. In some embodiments, the hologram engine may comprise the memory. In some embodiments, the memory may be external to the hologram engine.

The first path may be referred to as a light-ray path throughout this disclosure, and vice versa. These terms are used interchangeably. The second path may be referred to as a propagation path throughout this disclosure, and vice versa. These terms are used interchangeably.

As used herein, a description of a first path or a light-ray path or propagation path "making an angle" with the display device refers to an angle defined between a normal of the display device and the light-ray path or propagation path. In some embodiments, the display device may extend in a first dimension and a second dimension. The first dimension may be perpendicular to the second dimension. For example, the display device may be substantially quadrilateral (e.g. rectangular or square). A first edge of the display device may extend in the first dimension. A second edge of the display device may extend in the second dimension. In some embodiments, the angle made between the light-ray path or propagation path and the display device may have a component in at least one of the first dimension or the second dimension. In some embodiments, the angle made between the light-ray path and the propagation path may have components in both the first and second dimensions.

In some embodiments, the hologram engine is arranged to apply one or more grating functions (also referred to herein as phase-ramp functions) to the sub-hologram. As the skilled reader will appreciate, a "grating function" or a "phase-ramp function" is a function that provides a linear translation of light at an exit pupil of the optical system comprising a display device displaying the function. That is, the grating or phase-ramp function comprises an array of light modulation values which, when added to the hologram, linearly displaces the replay field by a defined magnitude and direction. The displacement may be measured in pixels, millimetres or degrees. The phase-ramp may also be referred to as a phase-wedge. The phase values of the phase-ramp may be wrapped (e.g. modulo 2π). A wrapped phase-ramp may be considered a phase grating. However, the present disclosure is not limited to phase-only modulation and the terms "grating function", "software grating" and "blazed grating" may be used as examples of a beam steering function such as a wrapped modulation ramp. A phase-ramp may be characterised by its phase gradient.

The one or more grating functions may be arranged to compensate for the reduction in angle of the propagation paths of the image points of the first subset. The one or more grating functions may be arranged to reverse the reduction in angle of the propagation paths of the image points of the first subset. This may be such that, when the sub-hologram combined with the one or more grating functions is suitably illuminated, the plurality of image points of the first subset are reconstructed in a position within the field of view of the optical system that corresponds to the respective position within the target picture. For example, if the angle of a propagation axis is reduced by 3 degrees in the first dimension during the calculation of the sub-hologram, a grating function may be chosen to increase the angle by 3 degrees in the first dimension to compensate. In other words, the one or more grating functions may be chosen to return the image points of the first subset to their intended position (as defined in the target picture). In some embodiments, a first grating function may be arranged to compensate for the reduction in angle in the first dimension. A second grating function may be arranged to compensate for the reduction in angle in the second dimension. The one or more grating function may be added to the first sub-hologram.

In some embodiments, the angle made by each propagation path (i.e. the propagation paths associated with image points of the first subset) and the display device is reduced by substantially the same amount. In other words, the angle of each propagation path may be reduced by the same amount relative to the respective angle made by the first path or light-ray path for that image point and the display device. Because a different first path or light-ray path may be associated with each image point of the first subset, and because each first path or light-ray path within the first subset may make a (slightly) different angle with respect to the display device, the angle for each propagation axis within the subset may also be (slightly) different. By reducing the angle made by each propagation axis of the first subset by the same amount, the grating function (or grating functions) can be applied to the sub-hologram in a single step to have the effect of moving / translating all image points of the first subset to their intended positions.

In some embodiments, the propagation path for at least some (optionally, all) of the image points of the first subset does not pass through the centre of the entrance pupil. As described above, the light-ray path is dependent on the position of the entrance pupil and the image point. However, the propagation path along which the waves associated with the first subset of image points are propagated has the reduced angle. Effectively this moves the notional starting point of the propagation path. It also has the effective of moving the notional end point of the propagation path such that it may no longer pass through the centre of the entrance pupil. Similarly, each propagation path associated with the first subset of image points may be arranged such that the respective wave does not pass through the respective image point.

In some embodiments, each propagation path for the image points of the first subset passes through a first portion of the target picture. In other words, the first portion of the target picture may be defined as a portion containing the image points of the first subset. A distance between the first portion and a centre of the target picture may be less than a distance between an image point of the first subset and said centre, optionally less than a distance between any image point of the first subset and the centre. In other words, the effect of reducing the angle made by each propagation axis with the display device may be moving the image points closer to the centre of the picture. Thus, in some embodiments, each propagation path is arranged as if the respective image point has been moved within the target picture to be closer to a centre of the target picture.

In some embodiments, the reduced angle of at least one propagation path is substantially equal to zero. As describe above, the starting angle of each light-ray path may differ (slightly). So, typically, not all the reduced propagation paths make an angle of exactly zero. It may be only one of the propagation paths (associated with a first point) of the first subset that is exactly equal to zero. For example, a propagation path associated with an image point at the centre of the first subset of image points may be reduced to be exactly equal to zero. The other image points of the first subset of points may be relatively close to the first image point such that the propagation path associated with each first image point may be described as being substantially equal to zero.

In some embodiments, the hologram engine is arranged to initially under-sample the first sub-hologram. Under-sampling the first sub-hologram may mean that values for pixels of the hologram are determined at a resolution that is less than a native resolution of the display device. This may mean that vales for the first sub-hologram are initially determined for a subset of pixels of the display device. There may be one or more non-determined pixel values between each determined pixel value. This under-sampling may be at the step of determining the contribution of the wave at the display device. Under-sampling the hologram may advantageously by computationally efficient, as described above. This may be because the determination of each pixel value of the hologram at this stage is computationally expensive. By under-sampling, the number of pixels values needing to be determined may be substantially reduced thus reducing the demands of the compute. The hologram engine may be arranged to interpolate the under-sampled first sub-hologram in at least a first dimension of display device to determine values for at least some of the non-determined values of the first sub-hologram. In other words, the interpolation may fill in the gaps between the determined values of the first sub-hologram. The inventors have recognised that it may be much more computationally efficient to calculate these "missing" values using interpolation than by determining the contribution of the wave for all pixel values (i.e. at full resolution). However, the inventors have also recognised that this interpolation approach may only be feasible because the wave at the display device for all image points has a low spatial frequency (because of the reduced angle of the propagation paths). Thus, the values on the display device change relatively slowly. It is therefore acceptable to initially under-sample the pixel values. If the values were relatively fast changing, then the under-sampling and interpolation approach might lead to significant aliasing problems.

In some embodiments, the hologram engine is arranged to divide the target picture into a plurality of subsets of image points. Each subset of image points may comprise a plurality of neighbouring image points. Each subset of image points may be defined by a discrete angular range. The angular range may be defined as a discrete range of angles from the display device. Subsets of image points may be defined by adjacent discrete angular ranges. Each angular range may be substantially equal to the other angular ranges. In other words, the hologram engine may be arranged to divide the target picture into a plurality of subsets of image points by dividing the target picture into a plurality of equally sized angular ranges. The hologram engine may be arranged to identify which image points are contained in each discrete angular range. The plurality of subsets of image points may not overlap. Thus, each image point may only be part of a single subset. In some embodiments, the hologram engine is arranged to divide the target picture into at least n subsets of image points. n may be greater than or equal to 2, optionally greater than or equal to 5, optionally greater than or equal to 10, optionally greater than or equal 50. The n subsets of image points may comprise the first subset.

For each of the n (or plurality) of subsets of image points, the hologram engine may be arranged to perform a corresponding calculation as described in relation to the first subset above. For example, the hologram engine may be arranged to determine an nth sub-hologram by determining a contribution of a wave or wavelet at the display device for each image point of the nth (or respective) subset. Each wave (for each image point of the respective subset) may be propagated along a propagation path. Each propagation path may be different to the respective light-ray path for the respective image point. Each propagation path may make a reduced angle with the normal of the display device. The advantages described in relation to the increased computational efficiency in calculating the first sub-hologram apply to the calculation of each of the n sub-holograms (with reduced propagation paths having a reduced angle).

In some embodiments, the angle made by the propagation path associated with each image point within the nth subset and the display device is reduced by substantially the same amount. This corresponds to what was described in relation the first subset above. In some embodiments, the reduced angle of at least one propagation path associated with an image point in each of the n subsets is substantially equal to zero. Again, the starting angle of each light-ray path may differ (slightly). So, typically, not all the reduced angles made by the propagation paths within a subset may be an angle of exactly zero. It may be only one of the propagation paths (associated with a first point) of the nth subset that are exactly equal to zero. For example, a propagation path associated with an image point at the centre of each of the n subsets of image points may be reduced to be exactly equal to zero. The other image points of the nth subset of points may be relatively close to the first image point, however, such that the propagation path associated with each first image point may be described as being substantially equal to zero.

In some embodiments, the hologram engine is arranged to apply one or more grating (or phase-ramp) functions to each of the n sub-hologram, the one or more grating functions being arranged to compensate for the reduced angle of the propagation path for the nth subset. In some embodiments, the amount that the angle made by propagation path is reduced by is different for different subsets.

The hologram engine may be arranged to output a hologram of the target picture by combining each of the n sub-holograms (for each of the n subsets of image points). The step of outputting the hologram may further comprise combining each of the grating functions (applied to each of the n sub-holograms) with the combined n sub-holograms. The step of combining each of the n sub-holograms and / or each of the grating functions may comprise superimposing said sub-holograms and / or grating functions, for example by summing the respective phase values at each pixel of the hologram.

As above, the hologram engine may be arranged to divide the target picture into at least n subsets, calculate sub-holograms for each of the n subsets of image points using modified propagation paths (making a reduced angle with the display device), and compensate for the modified propagation paths by applying one or more gradient functions. The inventors have recognised that the target picture may be divided into an optimized number of subsets of image points. In other words, the target picture may be divided into an optimized number of angular ranges. For example, it is efficient to group the image points into subsets because the same reduction in angle of the propagation axis may be applied to all image points and the same one or more grating functions may be applied to compensate. If the subsets are too small (such that there is a relatively large number of subsets each comprising relatively few image points), then the reduced angle and one or more grating functions need to be recalculated frequently. However, if the subsets are too large (such that there is a relatively small number of subsets each comprising a relatively large number of image points), then the memory requirements required to accumulate the contribution of all of the image points becomes much greater. Furthermore, the larger the subsets, the greater the deviation of the angle made by some propagation paths from zero (once the angle has been reduced). This may reduce the ability to under sample those points and so lessen the computational efficiency gains. The exact number of subsets that may be considered optimal will depend on the particular system (e.g. the size of the field of view, the resolution of the target picture, the size and type of memory used in the system, and the processing power available). However, the inventors have found that the number (n) of subsets of image points may typically be much larger than 2, much larger than 5, much larger than 10 or even much larger than 50. In one example, the inventors divided the target picture into an array of at least 10 by at least 10 subsets and achieved a significant computational efficiency gain.

Some of the features described above in relation to extending the hologram calculation method to a plurality of subsets of image points may be summarised as follows. The hologram engine may be arranged to group the image points of the target picture into a plurality of at least n subsets. Each subset may comprise a group of neighbouring image points that fall within a discrete angular range. In other words, the hologram engine may be arranged to divide the target picture / a field of view into a plurality of angular ranges. The hologram engine may be arranged to identify which image points falls into particular angular ranges to identify the at least n subsets. The hologram engine may be arranged to calculate a sub-hologram for each of the n subsets. For example, the hologram engine may be arranged to iteratively step through the n subsets in turn and calculate a respective sub-hologram. The sub-hologram for the nth subset of image points may be referred to as the nth sub-hologram. For the sub-hologram calculation of each of the n subsets of image points, the hologram engine may be arranged to propagate a wave along a propagation path that makes an angle with the display device that is reduced relative to the angle made by the respective light-ray path for that image point. The angle made by the propagation paths for each of the image points within an nth subset may be reduced by the same amount (relative to a respective light ray path for the respective image point). Preferably, at least one propagation path associated with an image point within each subset may make an angle equal to zero with the display device. Preferably, the propagation paths associated with each of the image points within each subset may make an angle substantially equal to zero with the display device. The hologram engine is further arranged to determine a contribution of the wave propagated along the (reduced angle) propagation path for each image point within the nth subset. Because the propagation path angle has been reduced, the hologram calculation can be made very computationally efficient. For example, the sub-hologram for each subset may initially be under sampled (e.g. determined at a lower resolution than the native resolution of the display device). The hologram engine may be arranged to interpolate each under sampled sub-hologram up to a higher resolution (for example, up to a resolution corresponding to the resolution of the display device or to fill in empty hologram pixels). In some embodiments, the hologram engine is arranged to compensate for the reduced angle used during the calculation of the sub-hologram by applying one or more compensatory gradient functions to each of the sub-holograms. For example, two gradient functions may be applied to each of the sub-holograms, a first gradient function for compensating in a first dimension (e.g. x-direction) and a second gradient function for compensation in a second direction (e.g. y-direction). The gradient functions may act to translate the reconstructions of each of the subsets image points in an opposite fashion to the effective translation caused by the reduced angle of the propagation axis. The inventors have found that it is convenient to treat subsets of image points in groups, rather than going through the process of determining a sub-hologram and applying the one or more grating functions for each image point on a point by point basis. This is because the one or more grating functions may be applied to a sub-hologram of multiple image points (i.e. all image points within a subset) in a single step. Thus, the applied one or more grating function may effectively compensate for the reduced angle of propagation for all image points within a subset in that single step. The hologram engine may be arranged to apply different gradient functions to different sub-holograms. This may be because the different sub-holograms are sub-holograms of image points having different locations (associated with different angular ranges) in the target picture. Thus, the angle of the propagation paths used in the different sub-hologram calculations may be reduced by different amounts and so different gradient function(s) may be needed to compensate for that reduction. The applied gradient function(s) may be described as effectively piecing the target picture back together (by pushing / translating each subset of image points back to the correct position in the field of view when the hologram is reconstructed). While it may appear (on the face of it) counterintuitive and complicated to remove angular information when calculating the sub-hologram, only to reintroduce this angular information back using gradient functions, the inventors have found that the computational efficiencies achieved by reducing the angle are significant and outweigh the apparent increased complication.

In a second aspect of the disclosure, there is provided a hologram engine for calculating a hologram for displaying on a display device of an optical system. The hologram is a hologram of a target picture comprising a plurality of image points. The hologram engine is arranged to determine a first sub-hologram of a first plurality of image points of the target picture by, for each image point, determining a contribution of a wave (or wavelet) at the display device. The hologram engine is arranged such that the wave has followed a second propagation path from the respective image point to the display device. The second propagation path for each image point defines a second angle with a normal of the display device that is different to (preferably, less than) a first angle made by a respective first propagation path from the respective image point to the display device and said normal of the display device. In other words, the angle of the second propagation has been changed / reduced relative to the first propagation path. Similarly to what was described in relation to the first aspect, this may advantageously mean that the sub-hologram is relatively slowly changing (because the wave is propagated such that it has a low spatial frequency). This advantageously enables under-sampling during the initial sub-hologram calculation, significantly increasing the computational efficiency of determining values of the sub-hologram. In effect, the modification of the propagation path may effectively mean that the second propagation path is propagated from a different point to the initial position of the image point defined in the target picture. This may amount to the respective image point having a modified position relative to the initial position in the target picture.

In some embodiments, the second angle is less than the first angle. In some embodiments, the second angle is substantially equal to zero (such that the second propagation path is substantially perpendicular to a plane of the display device). In some embodiments, the first propagation path for each image point is arranged such that it passes through an aperture of a viewing system in a viewing window of the optical system. In some embodiments, the second propagation path for at least some image points is arranged such that it does not pass through an aperture of a viewing system in a viewing window of the optical system.

In a third aspect of the present disclosure, there is provided a hologram engine for calculating a hologram of a target picture comprising a plurality of image points. The hologram may be suitable for displaying on a display device of an optical system. The hologram engine is arranged to determine a first sub-hologram of a first plurality of image points of the target picture. The hologram engine does this by, for each image point, propagating a wave (or wavelet) along a propagation axis from the respective image point to the display device. A principal angle associated with each image point is defined between the respective propagation axis and a normal of the display device. Determining the first sub-hologram comprises changing the principal angle of the propagation axis for each image point before propagating the wave. In other words, the hologram engine may be arranged such that, prior to the propagation, the principal angle may be different to principal angle that is used during propagation. The initial principal angle may be defined by a propagation axis defined from the respective image point to a viewing system in a viewing window of the optical system. The effect of changing the principal angle before propagation may be such that each image point is moved from an initial position (as defined in the target image) prior to the wave being propagated.

In some embodiments, changing the principal angle comprises reducing the principal angle of the propagation axis. In some embodiments, reducing the principal angle comprises reducing the principal angle substantially to zero. This may be such that the propagation axis for each image point is substantially perpendicular to the display device. In some embodiments, the hologram engine is further arranged to determine one more grating functions for compensating for the change in principal angle. The change in principal angle of the propagation axis for each image point may result in a change in position of said image points. The one or more diffraction gratings may be arranged to return the image points to their original position (when the sub-hologram and diffraction grating(s) are appropriately illuminated to form a holographic reconstruction of the target picture). The hologram engine may be arranged to combine (e.g. superimpose or display simultaneously) the first sub-hologram with the one or more first diffraction grating.

In a fourth aspect according to the disclosure, there is provided a hologram engine for calculating a hologram of a target picture comprising a plurality of image points. The hologram is for an optical system comprising a display device arranged to display the hologram and to spatially modulate light incident thereon in accordance with the hologram to form a holographic wavefront at least a portion of which is receivable by an entrance pupil of a viewer in a viewing window (or eye-box) of the optical system. The hologram engine is arranged to identify a plurality of first image points in a first portion of the target picture. For each first image point, the hologram engine is arranged to identify, using ray tracing, a ray that propagates from the display device to the entrance pupil via the respective first image point. The hologram engine is further arranged to determine a propagation angle of said ray with respect to a normal of the display device (at the display device). The hologram engine is further arranged to reduce the propagation angle. The hologram engine is further arranged to determine a sub-hologram for the plurality of first image points (for example, determine an array of complex amplitudes or phase values) using the reduced propagation angles of the respective rays.

In some embodiments, the hologram engine may be arranged to reduce the propagation angle to be closer to or substantially equal to zero. This may so that the ray for the respective point is substantially perpendicular to the display device. In other words, this may be such that the angle is substantially equal to zero at the display device. The propagation angle for each first image point (of the first portion of the target picture) may be reduced by the same amount. The hologram engine may further be arranged to determine one or more grating functions for compensating for the reduction in propagation angle or angles used in the sub-hologram determination. In some embodiments, the hologram engine is further arranged to combine the sub-hologram with the one or more grating functions.

In a fifth aspect according to the present disclosure, there is provided a hologram engine for calculating a hologram of a target picture comprising a plurality of image points. The hologram may be for displaying on a display device of an optical system. The hologram engine is arranged to identify a plurality of first image points in a first portion of the target picture. The hologram engine is further arranged to reposition (or translate) each first image point from the first portion to a second portion of the target image. The hologram engine is further arranged to determine a first sub-hologram of the repositioned first image points (i.e. a first sub-hologram of the reposition first image points when in the second portion). The second portion is positioned / located closer to a centre of the target picture than the first portion. Moving repositioning the first image points to a second portion being closer to a centre of the target picture advantageously means that the image points have been moved to a portion representing lower spatial frequencies than the first portion. This may mean that the first sub-hologram can advantageously be determined at a lower resolution (i.e. under-sampled) relative to a first sub-hologram of the image points in the first portion.

In a sixth aspect, there is provided a hologram engine for calculating a hologram of a target picture comprising a plurality of image points. The hologram is for displaying on a display device. The hologram engine is arranged to identify a first image point contained in a first portion of the target picture. The hologram engine is further arranged to reposition the first image point from the first portion to a second portion of target picture. The hologram engine is further arranged to determine a first sub-hologram for the repositioned first image point. The second portion is positioned closer to a centre of the target picture than the first portion.

The definition of the fifth and sixth aspects defines the invention in terms of moving image points whereas the definition of the first aspect (and many other aspects) defines the invention in terms of changing an angle of a propagation path associated with each image point. It should be clear to the skilled reader that changing the propagation path angle has a corresponding effect to moving the image point. Thus, the skilled reader will understand that both definitions are related to a corresponding concept. In particular, both the movement of the image points and the change / reduction in angle of the propagation paths has the effect of resulting in the sub-hologram having a relatively lower spatial frequency.

In a seventh aspect, there is provided a method of calculating a hologram of a target picture for displaying on a display device of an optical system. The target picture comprises a plurality of image points. Each image point is defined by a light-ray path therefrom to an entrance pupil of a viewer. Each light-ray path making an angle with the display device. The method comprises determining a first sub-hologram of a first subset of the image points of the target picture. The step of determining the first sub-hologram comprises, for each image point of the first subset: a) propagating a wave along a propagation path that makes an angle with the display device that is reduced relative to the angle made by the respective light-ray path; and b) determining a contribution of the wave at the display device for each image point of the first subset.

The method may comprise determining or forming a hologram of the target picture. The determined or formed hologram may comprise the first sub-hologram. The method may comprise outputting, displaying or storing the hologram of the target picture.

The method may comprise to displaying the hologram on a display device, such as a spatial light modulator. The method may comprise illuminating the hologram, for example illuminating the hologram with light from a light source such as a laser. The hologram is arranged such that, when the hologram is displayed on a display device and suitably illuminated, the first subset of image points of the target picture may be holographically reconstructed. Thus, the method may comprise holographically reconstructing the first subset of image points.

The method may comprise storing the (determined or formed) hologram in a memory. In some embodiments, the method further comprises applying one or more grating functions to the first sub-hologram, the one or more grating functions being arranged to compensate for the reduction in angle of the propagation paths for the image points of the first subset.

In some embodiments, the method comprises identifying or defining the propagation path for each of the first image points before propagation the respective wave along the propagation path. The step of identifying or defining the propagation path may comprise taking the respective light-ray path modifying it. The modifying of the respective light-ray path may comprise reducing the angle made by the respective light-ray path and the display device. The angle may be reduced to substantially zero. In other words, it may be said that the method comprises the step of moving each of the image points of the first subset. This is because it could be said that moving the light-ray path has the effect of moving the starting point of the light-ray path and the starting point of the light-ray path may be equivalent to the position of the respective image point. The step of moving each of the image points of the first subset may involve moving each of the image points closer to a centre of the target picture. This may be because reducing the angle made at the display device may be said to have the effect of brining the image points closer to a centre of a field of view of the display.

In some embodiments, the angle made by the propagation path associated with each image point of the first subset and the display device is reduced by substantially the same amount.

In some embodiments, the step of propagating the waves may comprise propagating the waves along propagation paths for at least some of the image points of the first subset that do not pass through the entrance pupil. In some embodiments, the step of propagating the waves along propagation paths for the image points of the first subset may comprise propagating the waves along propagation paths arranged such that the respective wave does not pass through the respective image point. In some embodiments, each propagation path for the image points of the first subset passes through a first portion of the target picture, wherein a distance between the first portion and a centre of the target picture is less than a distance between at least one image point of the first subset and said centre.

In some embodiments, determining the first sub-hologram may comprise initially under-sampling the first sub-hologram. This may be such that values for the first sub-hologram are initially determined for a subset of pixels of the display device with one or more non-determined pixels between each determined sub-hologram pixel. The method may further comprise interpolating the under-sampled first sub-hologram in at least a first dimension of display device. The interpolation may be such that values for at least some of the non-determined values of the first sub-hologram are determined.

In some embodiments, the method may comprise dividing the target picture into at least n subsets of image points, wherein n is greater than or equal to 10. The n subsets may comprise the first subset. The method may comprise, for each of the n subsets of image points, determining an nth sub-hologram for the nth subset. This may comprise determining a contribution of a wave at the display device for each image point of the nth subset. ach wave is propagated along a propagation path that makes a reduced angle with the normal of the display device relative to an angle made by the respective light-ray path. In some embodiments, the angle made by the propagation path associated with each image point within the nth subset and the display device is reduced by substantially the same amount.

The method may comprise applying one or more grating functions to the sub-hologram of each of the n subsets, the one or more grating functions being arranged to compensate for the reduced angle of the propagation path for the nth subset.

In some embodiments, the method of the seventh aspect is a computer implemented method.

In an eighth aspect according to the present disclosure there is provided an optical system comprising a display device for displaying a hologram and a processor adapted to performed the steps of the method of the seventh aspect.

In a ninth aspect according to the present disclosure, there is provided a computer program comprising instructions which, when the program is executed by a computer, cause the computer to carry out the steps of the method of the seventh aspect.

In a tenth aspect according to the present disclosure there is provided a computer-readable storage medium comprising instructions which, when executed by a computer, cause the computer to carry the steps of the method of the seventh aspect.

In an eleventh aspect according to the present disclosure there is provided an optical system comprising a display device for displaying a hologram and a processor. The processor is adapted to perform the steps of a method of calculating a hologram of a target picture for displaying on a display device of an optical system, the target picture comprising a plurality of image points, wherein each image point is defined by a first path therefrom to an entrance pupil of a viewer, each first path making an angle with the display device. The method (that the processor is adapted to perform) comprises:
determining a first sub-hologram of a first subset of the image points of the target picture;
wherein the determining of the first sub-hologram comprises, for each image point of the first subset:
   propagating a wave along a second path that makes an angle with the display device that is reduced relative to the angle made by the respective first path; and
   determining a contribution of the wave at the display device for each image point of the first subset.

In a ninth aspect according to the present disclosure, there is provided a computer program comprising instructions which, when the program is executed by a computer, cause the computer to carry out the steps of a method of calculating a hologram of a target picture for displaying on a display device of an optical system, the target picture comprising a plurality of image points, wherein each image point is defined by a first path therefrom to an entrance pupil of a viewer, each first path making an angle with the display device. The method (that the computer is caused to carry out by the computer program) comprises:
determining a first sub-hologram of a first subset of the image points of the target picture;
wherein the determining of the first sub-hologram comprises, for each image point of the first subset:
   propagating a wave along a second path that makes an angle with the display device that is reduced relative to the angle made by the respective first path; and
   determining a contribution of the wave at the display device for each image point of the first subset.

In a tenth aspect according to the present disclosure there is provided a computer-readable storage medium comprising instructions which, when executed by a computer, cause the computer to carry out the steps of a method of calculating a hologram of a target picture for displaying on a display device of an optical system, the target picture comprising a plurality of image points, wherein each image point is defined by a first path therefrom to an entrance pupil of a viewer, each first path making an angle with the display device. The method (that the computer is caused to carry out by the instructions) comprises:
determining a first sub-hologram of a first subset of the image points of the target picture;
wherein the determining of the first sub-hologram comprises, for each image point of the first subset:
   propagating a wave along a second path that makes an angle with the display device that is reduced relative to the angle made by the respective first path; and
   determining a contribution of the wave at the display device for each image point of the first subset.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. It may therefore be said that a plurality of replicas of the hologram are formed. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of rr/2 will retard the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 shows an image for projection comprising eight image areas/components, V1 to V8, and cross-sections of the corresponding hologram channels, H1-H8;
Figure 3 shows a hologram displayed on an LCOS that directs light into a plurality of discrete areas;
Figure 4 shows a system, including a display device that displays a hologram that has been calculated as illustrated in Figures 2 and 3;
Figure 5A shows a perspective view of a first example two-dimensional pupil expander comprising two replicators each comprising pairs of stacked surfaces;
Figure 5B shows a perspective view of a first example two-dimensional pupil expander comprising two replicators each in the form of a solid waveguide;
Figure 6 shows a schematic representing a conventional point cloud hologram method;
Figure 7A shows a hologram of a first image point of the point cloud of Figure 6 in isolation;
Figure 7B shows a hologram of another image point, different to the first image point, of the point cloud of Figure 6 in isolation;
Figure 8A shows a first image point of a point cloud in a point cloud hologram according to the present disclosure, including a light-ray path extending from the first image point;
Figure 8B shows the propagation path along which a wave is propagated for calculating a contribution of the first image point to the hologram;
Figure 9 shows an under-sampled sub-hologram;
Figure 10 shows a target picture;
Figure 11 shows the target picture of Figure 10 being divided into a plurality of cells; and
Figure 12 shows a representation of a holographic reconstruction of a sub-hologram of a first cell of Figure 11 calculated in accordance with the method of present disclosure and before one or more grating functions have been applied to compensate for the reduction in angle of the propagation path(s) used in the calculation.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/underthe other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

In the present disclosure, the term "substantially" when applied to a structural units of an apparatus may be interpreted as the technical feature of the structural units being produced within the technical tolerance of the method used to manufacture it.

### Conventional optical configuration for holographic projection

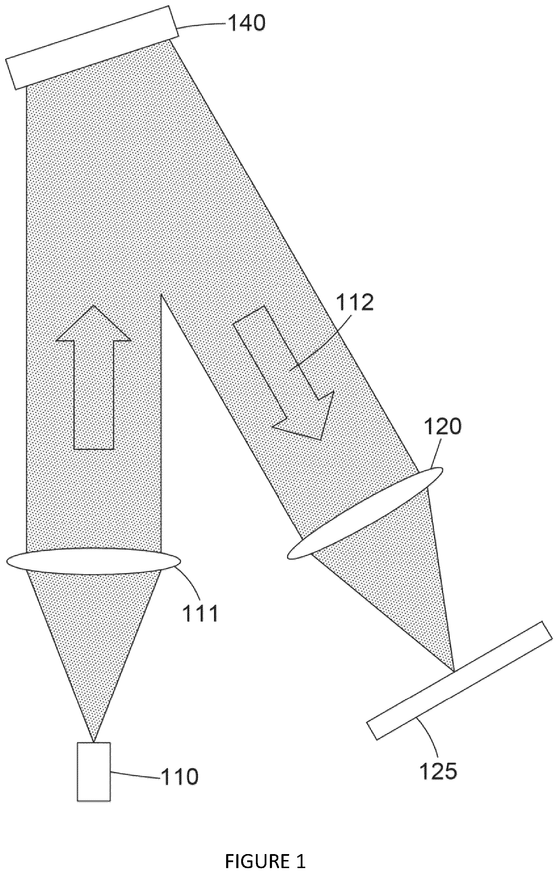

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform In some embodiments of the present disclosure, the lens of the viewer's eye performs the hologram to image transformation.

### Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, the present disclosure is also applicable to holograms calculated by other techniques such as those based on point cloud methods.

In some embodiments, the hologram engine is arranged to exclude from the hologram calculation the contribution of light blocked by a limiting aperture of the display system. British patent application 2101666.2, filed 5 February 2021 and incorporated herein by reference, discloses a first hologram calculation method in which eye-tracking and ray tracing are used to identify a sub-area of the display device for calculation of a point cloud hologram which eliminates ghost images. The sub-area of the display device corresponds with the aperture, of the present disclosure, and is used exclude light paths from the hologram calculation. British patent application 2112213.0, filed 26 August 2021 and incorporated herein by reference, discloses a second method based on a modified Gerchberg-Saxton type algorithm which includes steps of light field cropping in accordance with pupils of the optical system during hologram calculation. The cropping of the light field corresponds with the determination of a limiting aperture of the present disclosure. British patent application 2118911.3, filed 23 December 2021 and also incorporated herein by reference, discloses a third method of calculating a hologram which includes a step of determining a region of a so-called extended modulator formed by a hologram replicator. The region of the extended modulator is also an aperture in accordance with this disclosure.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

### Large field of view using small display device

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a `light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other examples, the image is a real image formed by holographic reconstruction and the image is projected or relayed to the viewing plane. In these other examples, spatially modulated light of an intermediate holographic reconstruction formed either in free space or on a screen or other light receiving surface between the display device and the viewer, is propagated to the viewer. In both cases, an image is formed by illuminating a diffractive pattern (e.g., hologram or kinoform) displayed on the display device.

The display device comprises pixels. The pixels of the display may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some embodiments, the (light of a) hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these embodiments, there is no intermediate holographic reconstruction / image formed between the display device and the viewer. It is sometimes said that, in these embodiments, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. x and y. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g., any one eye position within a viewing window such as eye-box.)

In some embodiments, the image perceived by a viewer is a virtual image that appears upstream of the display device - that is, the viewer perceives the image as being further away from them than the display device. Conceptually, it may therefore be considered that the viewer is looking at a virtual image through an 'display device-sized window', which may be very small, for example 1cm in diameter, at a relatively large distance, e.g., 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels).

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure encompasses non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window or eye-box. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

The display device may have an active or display area having a first dimension that may be less than 10 cms such as less than 5 cms or less than 2 cms. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some embodiments - described only by way of example of a diffracted or holographic light field in accordance with this disclosure - a hologram is configured to route light into a plurality of channels, each channel corresponding to a different part (i.e. sub-area) of an image. The channels formed by the diffractive structure are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram may also be a point cloud hologram. The hologram is described herein as routing light into a plurality of hologram channels to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically and uniquely, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels.

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the cross-sectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffracted light field may be defined by a "light cone". Thus, the size of the diffracted light field (as defined on a two-dimensional plane) increases with propagation distance from the corresponding diffractive structure (i.e. display device). It can be said that the pupil expander/s replicate the hologram or form at least one replica of the hologram, to convey that the light delivered to the viewer is spatially modulated in accordance with a hologram.

In some embodiments, two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

### Light channelling

The hologram formed in accordance with some embodiments, angularly-divides the image content to provide a plurality of hologram channels which may have a cross-sectional shape defined by an aperture of the optical system. The hologram is calculated to provide this channelling of the diffracted light field. In some embodiments, this is achieved during hologram calculation by considering an aperture (virtual or real) of the optical system, as described above.

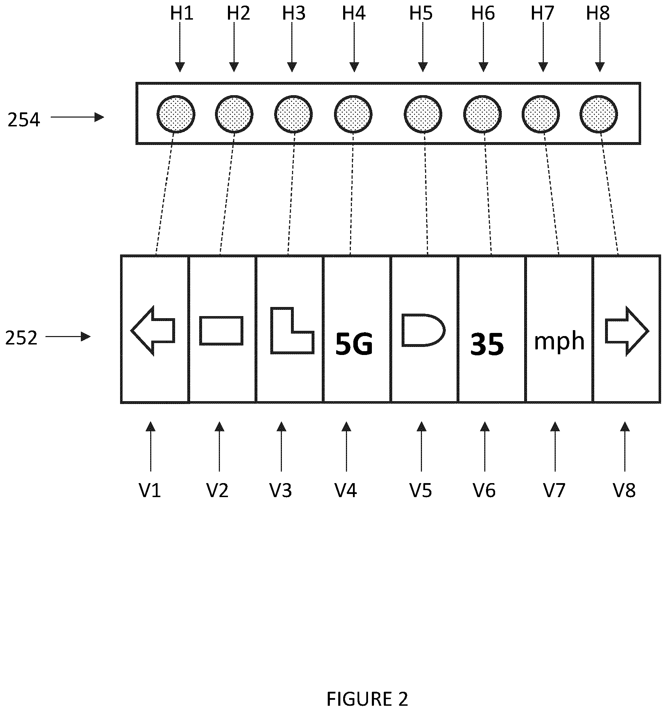

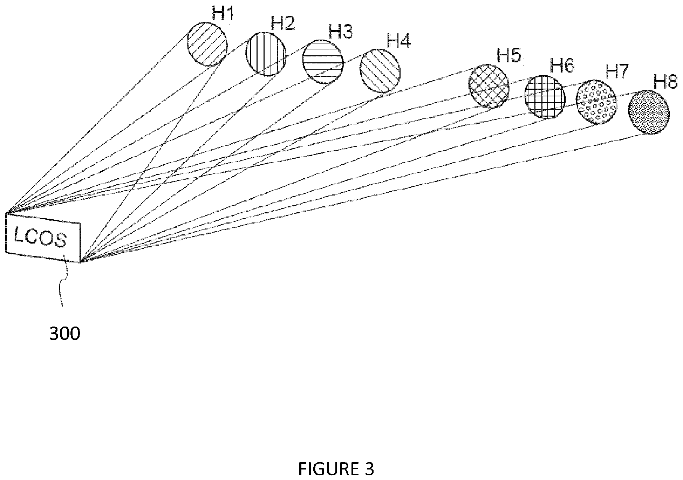

Figures 2 and 3 show an example of this type of hologram that may be used in conjunction with a pupil expander as disclosed herein. However, this example should not be regarded as limiting with respect to the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas. The discrete areas are discs in the example shown but other shapes are envisaged. The size and shape of the optimum disc may, after propagation through the waveguide, be related to the size and shape of an aperture of the optical system such as the entrance pupil of the viewing system.

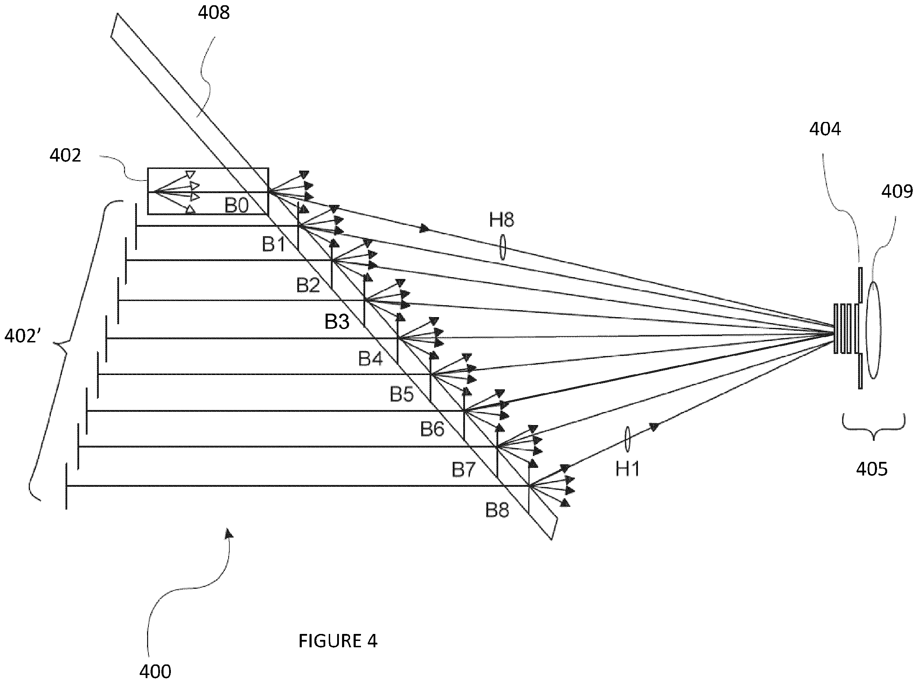

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or `diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 508 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguide are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

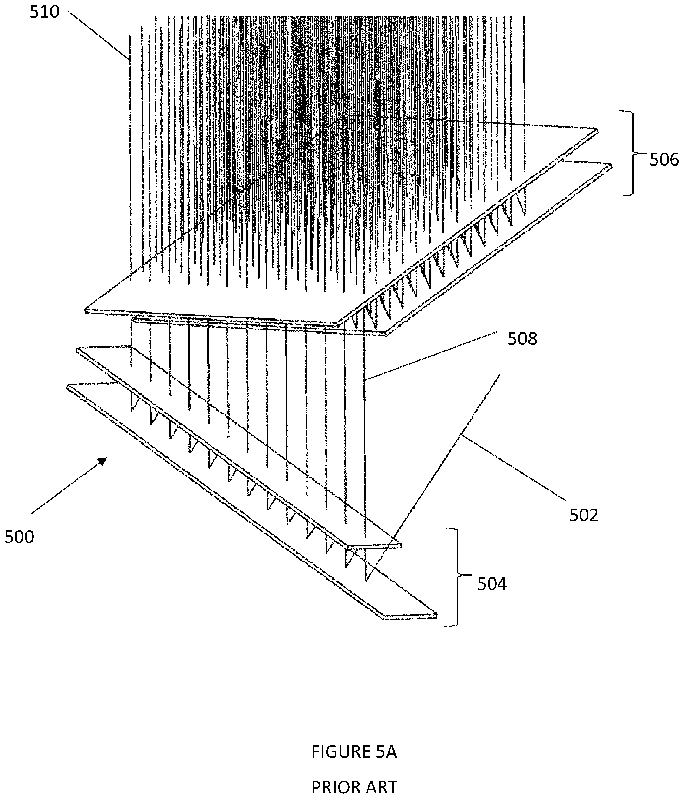

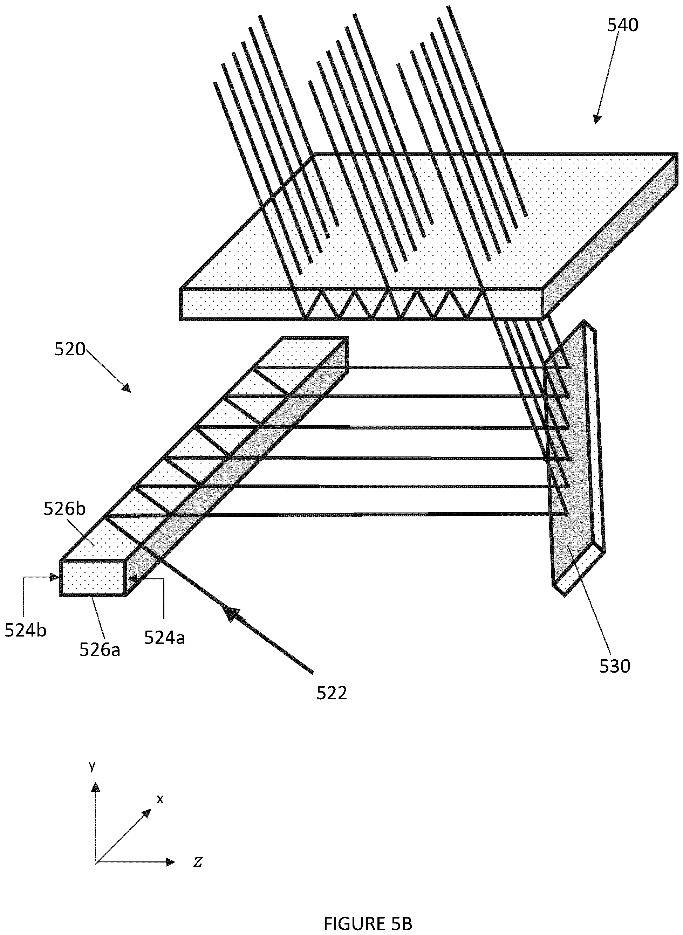

The waveguide 408 forms a plurality of replicas of the hologram, at the respective "bounce" points B1 to B8 along its length, corresponding to the direction of pupil expansion. As shown in Figure 5, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

Although virtual images, which require the eye to transform received modulated light in order to form a perceived image, have generally been discussed herein, the methods and arrangements described herein can be applied to real images.

### Two-Dimensional Pupil Expansion

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

Figure 5A shows a perspective view of a system 500 comprising two replicators, 504, 506 arranged for expanding a light beam 502 in two dimensions.

In the system 500 of Figure 5A, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The collimated light beam 502 is directed towards an input on the first replicator 504. Due to a process of internal reflection between the two surfaces, and partial transmission of light from each of a plurality of output points on one of the surfaces (the upper surface, as shown in Figure 5A), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5A), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5A combine to provide a two-dimensional replicator (or, "two-dimensional pupil expander"). Thus, the replica light beams 510 may be emitted along an optical path to an expanded eye-box of a display system, such as a head-up display.

In the system of Figure 5A, the first replicator 504 is a waveguide comprising a pair of elongate rectilinear reflective surfaces, stacked parallel to one another, and, similarly, the second replicator 504 is a waveguide comprising a pair of rectangular reflective surfaces, stacked parallel to one another. In other systems, the first replicator may be a solid elongate rectilinear waveguide and the second replicator may be a solid planar rectangular shaped waveguide, wherein each waveguide comprises an optically transparent solid material such as glass. In this case, the pair of parallel reflective surfaces are formed by a pair of opposed major sidewalls optionally comprising respective reflective and reflective-transmissive surface coatings, familiar to the skilled reader.

Figure 5B shows a perspective view of a system 500 comprising two replicators, 520, 540 arranged for replicating a light beam 522 in two dimensions, in which the first replicator is a solid elongated waveguide 520 and the second replicator is a solid planar waveguide 540.

In the system of Figure 5B, the first replicator/waveguide 520 is arranged so that its pair of elongate parallel reflective surfaces 524a, 524b are perpendicular to the plane of the second replicator/ waveguide 540. Accordingly, the system comprises an optical coupler arranged to couple light from an output port of first replicator 520 into an input port of the second replicator 540. In the illustrated arrangement, the optical coupler is a planar/fold mirror 530 arranged to fold or turn the optical path of light to achieve the required optical coupling from the first replicator to the second replicator. As shown in Figure 5B, the mirror 530 is arranged to receive light - comprising a one-dimensional array of replicas extending in the first dimension - from the output port / reflective-transmissive surface 524a of the first replicator/waveguide 520. The mirror 530 is tilted so as to redirect the received light onto an optical path to an input port in the (fully) reflective surface of second replicator 540 at an angle to provide waveguiding and replica formation, along its length in the second dimension. It will be appreciated that the mirror 530 is one example of an optical element that can redirect the light in the manner shown, and that one or more other elements may be used instead, to perform this task.

In the illustrated arrangement, the (partially) reflective-transmissive surface 524a of the first replicator 520 is adjacent the input port of the first replicator/waveguide 520 that receives input beam 522 at an angle to provide waveguiding and replica formation, along its length in the first dimension. Thus, the input port of first replicator/waveguide 520 is positioned at an input end thereof at the same surface as the reflective-transmissive surface 524a. The skilled reader will understand that the input port of the first replicator/waveguide 520 may be at any other suitable position.

Accordingly, the arrangement of Figure 5B enables the first replicator 520 and the mirror 530 to be provided as part of a first relatively thin layer in a plane in the first and third dimensions (illustrated as an x-z plane). In particular, the size or "height" of a first planar layer - in which the first replicator 520 is located - in the second dimension (illustrated as the y dimension) is reduced. The mirror 530 is configured to direct the light away from a first layer/plane, in which the first replicator 520 is located (i.e. the "first planar layer"), and direct it towards a second layer/plane, located above and substantially parallel to the first layer/plane, in which the second replicator 540 is located (i.e. a "second planar layer"). Thus, the overall size or "height" of the system - comprising the first and second replicators 520, 540 and the mirror 530 located in the stacked first and second planar layers in the first and third dimensions (illustrated as an x-z plane) - in the second dimension (illustrated as the y dimension) is compact. The skilled reader will understand that many variations of the arrangement of Figure 5B for implementing the present disclosure are possible and contemplated.

The image projector may be arranged to project a diverging or diffracted light field. In some embodiments, the light field is encoded with a hologram. In some embodiments, the diffracted light field comprises diverging ray bundles. In some embodiments, the image formed by the diffracted light field is a virtual image.

In some embodiments, the first pair of parallel / complementary surfaces are elongate or elongated surfaces, being relatively long along a first dimension and relatively short along a second dimension, for example being relatively short along each of two other dimensions, with each dimension being substantially orthogonal to each of the respective others. The process of reflection/transmission of the light between/from the first pair of parallel surfaces is arranged to cause the light to propagate within the first waveguide pupil expander, with the general direction of light propagation being in the direction along which the first waveguide pupil expander is relatively long (i.e., in its "elongate" direction).

There is disclosed herein a system that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram. The use diffraction and a diffractive structure necessitates a display device with a high density of very small pixels (e.g. 1 micrometer) - which, in practice, means a small display device (e.g. 1 cm). The inventors have addressed a problem of how to provide 2D pupil expansion with a diffracted light field e.g. diffracted light comprising diverging (not collimated) ray bundles.

In some embodiments, the display system comprises a display device - such as a pixelated display device, for example a spatial light modulator (SLM) or Liquid Crystal on Silicon (LCoS) SLM - which is arranged to provide or form the diffracted or diverging light. In such aspects, the aperture of the spatial light modulator (SLM) is a limiting aperture of the system. That is, the aperture of the spatial light modulator - more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extend by the use of at least one pupil expander.

The diffracted or diverging light field may be said to have "a light field size", defined in a direction substantially orthogonal to a propagation direction of the light field. Because the light is diffracted / diverging, the light field size increases with propagation distance.

In some embodiments, the diffracted light field is spatially-modulated in accordance with a hologram. In other words, in such aspects, the diffractive light field comprises a "holographic light field". The hologram may be displayed on a pixelated display device. The hologram may be a computer-generated hologram (CGH). It may be a Fourier hologram or a Fresnel hologram or a point-cloud hologram or any other suitable type of hologram. The hologram may, optionally, be calculated so as to form channels of hologram light, with each channel corresponding to a different respective portion of an image that is intended to be viewed (or perceived, if it is a virtual image) by the viewer. The pixelated display device may be configured to display a plurality of different holograms, in succession or in sequence. Each of the aspects and embodiments disclosed herein may be applied to the display of multiple holograms.

The output port of the first waveguide pupil expander may be coupled to an input port of a second waveguide pupil expander. The second waveguide pupil expander may be arranged to guide the diffracted light field - including some of, preferably most of, preferably all of, the replicas of the light field that are output by the first waveguide pupil expander - from its input port to a respective output port by internal reflection between a third pair of parallel surfaces of the second waveguide pupil expander.

The first waveguide pupil expander may be arranged to provide pupil expansion, or replication, in a first direction and the second waveguide pupil expander may be arranged to provide pupil expansion, or replication, in a second, different direction. The second direction may be substantially orthogonal to the first direction. The second waveguide pupil expander may be arranged to preserve the pupil expansion that the first waveguide pupil expander has provided in the first direction and to expand (or, replicate) some of, preferably most of, preferably all of, the replicas that it receives from the first waveguide pupil expander in the second, different direction. The second waveguide pupil expander may be arranged to receive the light field directly or indirectly from the first waveguide pupil expander. One or more other elements may be provided along the propagation path of the light field between the first and second waveguide pupil expanders.

The first waveguide pupil expander may be substantially elongated and the second waveguide pupil expander may be substantially planar. The elongated shape of the first waveguide pupil expander may be defined by a length along a first dimension. The planar, or rectangular, shape of the second waveguide pupil expander may be defined by a length along a first dimension and a width, or breadth, along a second dimension substantially orthogonal to the first dimension. A size, or length, of the first waveguide pupil expander along its first dimension make correspond to the length or width of the second waveguide pupil expander along its first or second dimension, respectively. A first surface of the pair of parallel surfaces of the second waveguide pupil expander, which comprises its input port, may be shaped, sized, and/or located so as to correspond to an area defined by the output port on the first surface of the pair of parallel surfaces on the first waveguide pupil expander, such that the second waveguide pupil expander is arranged to receive each of the replicas output by the first waveguide pupil expander.

The first and second waveguide pupil expander may collectively provide pupil expansion in a first direction and in a second direction perpendicular to the first direction, optionally, wherein a plane containing the first and second directions is substantially parallel to a plane of the second waveguide pupil expander. In other words, the first and second dimensions that respectively define the length and breadth of the second waveguide pupil expander may be parallel to the first and second directions, respectively, (or to the second and first directions, respectively) in which the waveguide pupil expanders provide pupil expansion. The combination of the first waveguide pupil expander and the second waveguide pupil expander may be generally referred to as being a "pupil expander".

It may be said that the expansion/replication provided by the first and second waveguide expanders has the effect of expanding an exit pupil of the display system in each of two directions. An area defined by the expanded exit pupil may, in turn define an expanded eye-box area, from which the viewer can receive light of the input diffracted or diverging light field. The eye-box area may be said to be located on, or to define, a viewing plane.

The two directions in which the exit pupil is expanded may be coplanar with, or parallel to, the first and second directions in which the first and second waveguide pupil expanders provide replication/expansion. Alternatively, in arrangements that comprise other elements such as an optical combiner, for example the windscreen (or, windshield) of a vehicle, the exit pupil may be regarded as being an exit pupil from that other element, such as from the windscreen. In such arrangements, the exit pupil may be non-coplanar and non-parallel with the first and second directions in which the first and second waveguide pupil expanders provide replication/expansion. For example, the exit pupil may be substantially perpendicular to the first and second directions in which the first and second waveguide pupil expanders provide replication/expansion.

The viewing plane, and/or the eye-box area, may be non-coplanar or non-parallel to the first and second directions in which the first and second waveguide pupil expanders provide replication/expansion. For example, a viewing plane may be substantially perpendicular to the first and second directions in which the first and second waveguide pupil expanders provide replication/expansion.

In order to provide suitable launch conditions to achieve internal reflection within the first and second waveguide pupil expanders, an elongate dimension of the first waveguide pupil expander may be tilted relative to the first and second dimensions of the second waveguide pupil expander.

### Combiner shape compensation

An advantage of projecting a hologram to the eye-box is that optical compensation can be encoded in the hologram (see, for example, European patent 2936252 incorporated herein by herein). The present disclosure is compatible with holograms that compensate for the complex curvature of an optical combiner used as part of the projection system. In some embodiments, the optical combiner is the windscreen of a vehicle. Full details of this approach are provided in European patent 2936252 and are not repeated here because the detailed features of those systems and methods are not essential to the new teaching of this disclosure herein and are merely exemplary of configurations that benefit from the teachings of the present disclosure.

### Control device

The present disclosure is also compatible with optical configurations that include a control device (e.g. light shuttering device) to control the delivery of light from a light channelling hologram to the viewer. The holographic projector may further comprise a control device arranged to control the delivery of angular channels to the eye-box position. British patent application 2108456.1, filed 14 June 2021 and incorporated herein by reference, discloses the at least one waveguide pupil expander and control device. The reader will understand from at least this prior disclosure that the optical configuration of the control device is fundamentally based upon the eye-box position of the user and is compatible with any hologram calculation method that achieves the light channeling described herein. It may be said that the control device is a light shuttering or aperturing device. The light shuttering device may comprise a 1D array of apertures or windows, wherein each aperture or window independently switchable between a light transmissive and a light non-transmissive state in order to control the deliver of hologram light channels, and their replicas, to the eye-box. Each aperture or window may comprise a plurality of liquid crystal cells or pixels.

### Point cloud hologram calculation

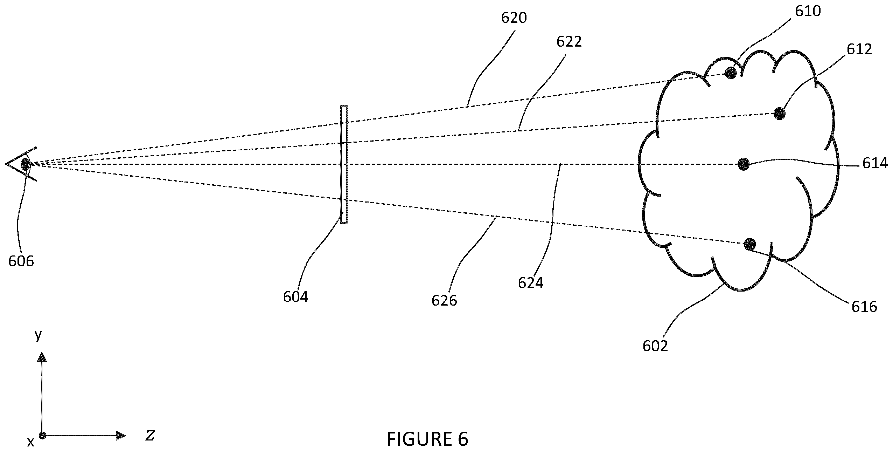

Figure 6 shows a schematic representing a conventional point cloud hologram method. Figure 6 comprises a point cloud 602 (i.e. a cloud of image points), a display device 604 (or hologram plane), and an entrance pupil 606. The display device 604 is positioned between the entrance pupil 606 and the point cloud 602 and, in this example, is a pixellated liquid crystal on silicon spatial light modulator. In this example, the position of the entrance pupil 606 has been determined by eye-tracking of a viewer. The method described herein is performed virtually (i.e. is a simulation). Thus, Figure 6 is merely a representation of what is performed computationally during the point cloud hologram calculation. Furthermore, each of the steps of the method are performed virtually. For example, where it is described that a wave is propagated, a wave is not physically propagated through a physical system. Instead, a virtual wave is virtually propagated through features of a virtual system. The display device 604 in this example represents the plane at which the hologram will be displayed once it has been calculated. As described in more detail below, the purpose of the point cloud hologram calculation is to determine a hologram that can be (physically) displayed on the display device 604 such that, when the hologram is suitably (physically) illuminated with coherent light, a (physical) holographic wavefront is formed that is relayed to the real entrance pupil of a viewer giving the appearance of a holographic reconstruction of the three-dimension point cloud.

In this example, the point cloud 602 is three-dimensional point cloud, the points representing an object or a scene. In particular, the point cloud 602 is representative of a target picture based on which the hologram is calculated. Four image points are shown in Figure 6: a first image point 610, a second image point 612, a third image point 614, and a fourth image point 616. The first to fourth image points are distributed throughout the point cloud 604. This merely representative. It should be understood that, typically, a point cloud for a point cloud hologram will comprise thousands or millions of image points that together represent a picture.

Conventionally, a point cloud hologram calculation method comprises simulating the propagation of light waves (or wavelets) from each of the image points of the point cloud 604 towards the centre of the entrance pupil 606 along propagation paths. The propagation paths for the first to fourth image points 610 to 614 are represented by the broken lines in Figure 6. A first propagation path 620 extends from the first image point 610 to the entrance pupil 606; a second propagation path 622 extends from the second image point 612 to the entrance pupil 606; a third propagation path 624 extends from the third image point 614 to the entrance pupil 606; and a fourth propagation path 626 extends from the fourth image point 616 to the entrance pupil 606. The skilled reader will be familiar with suitable approaches and algorithms for performing this propagation of light waves.

It should be noted that the optical system of Figure 6 is simplified. In most examples, one or more optical components will be in position between the point cloud 602 / display device 604 and the viewer. The propagation paths may pass through these one or more optical components. For example, the one or more optical components may comprise one or more lenses, one or more mirrors and / or a waveguide, as described above. The point cloud hologram calculation will need to take each of these optical components into account when virtually propagation waves from the image points. Furthermore, Figure 6 is not drawn to scale. For example, in a head-up display for a vehicle, the distance between the display device 604 and the viewer may be 1 metre or more. The distance from the viewer to the point cloud 602 may be further.

After simulating the propagation of light waves, the next step of the method is obtain complex values at each point on the (virtual) display device 604 or hologram plane. The display device 604 is pixellated. Conventionally, this step of the method comprises determining complex values for each and every pixel at the display device 604. In this example, a phase-only hologram is determined such that phase values are extracted from the complex values for each and every pixel. The skilled reader will be familiar with determining these values. This example is iterative, iterating over each of the image points. In particular, in each iteration, a light wave is propagated from the respective image point and the complex values for each and every pixel at the display device 604 are determined, followed by the phase values. The phase values for each image point are summed, superimposed, accumulated or otherwise combined to output a hologram for the target picture.

### Improved point cloud hologram calculation method

It would be desirable to be able to calculate point-cloud holograms in real-time such that a sequence of holograms of different target pictures can be calculated and displayed sequentially at a relatively high frame rate (such as, for example, at least 30 frames per second) and at high enough resolution that the reconstruction of the holograms appears good quality. It would also be desirable to achieve this with relatively limited computational resources. For example, a head-up display of a vehicle may have relatively limited on-board computational resources.

However, the point cloud hologram calculation method described in relation to Figure 6 is very computationally expensive meaning that such real-time calculation is not practical, certainly not at high resolution and using a device with relatively limited on-board computation resources. Thus, the inventors have devised the improved point cloud hologram calculation method described herein.

The inventors have recognised that the spatial frequency of hologram of an image point is dependent on the position of that image point in the point cloud hologram. Generally, the spatial frequency refers to the variation in the phase and / or intensity of the wavefront / hologram across different positions within the hologram. In this example, the holograms are phase-only holograms and so the spatial frequency refers to the variation in phase.

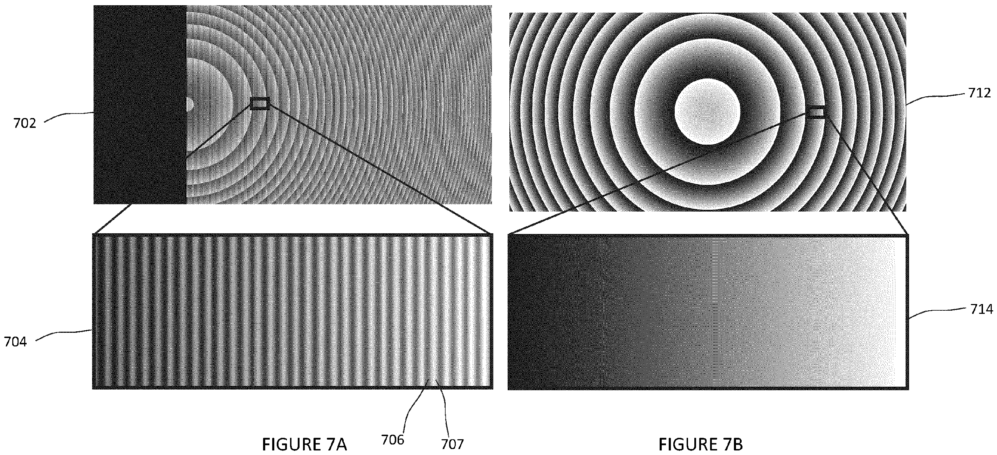

Figure 7A shows a hologram of the first image point 610 of Figure 6 in isolation. Figure 7B shows a hologram of the third image point 614 of Figure 6 in isolation. The top pane 702 of Figure 7A shows the full hologram of the first image point 610. The bottom pane 704 of Figure 7A shows a close-up of a portion of the full hologram of the first image point 610. The top pane 712 of Figure 7B shows the full hologram of the third image point 614. The bottom pane 714 of Figure 7B shows a close-up of a portion of the full hologram of the third image point 614. Both Figures 7A and 7B are greyscale, and both represent how the phase delay applied the hologram spatially varies. In this example, the phase varies from dark (black), representing a phase delay of 0, to light (white), representing a phase delay of 2pi.

As can be seen in Figure 7A and 7B, the spatial frequency of the hologram of the first image point 610 (as shown in Figure 7A) is much higher than the spatial frequency of the third image point 614 (as shown in Figure 7B). In other words, the phase of the hologram of Figure 7A changes much more rapidly than the phase of the hologram of Figure 7B. This difference in spatial frequency becomes particularly evident when comparing the bottom panes 704, 714 of Figures 7A and 7B. In the bottom pane 704 of Figure 7A, the phase is changing by roughly pi between adjacent columns of pixels. See, for example, the difference in darkness between a first column of pixels 706 and a second column of pixels 707 in Figure 7A. However, in the bottom pane 714 of Figure 7B (which is at the same scale as the bottom pane 704 of Figure 7A), the change is phase is much more gradual. The phase changes very smoothly from roughly 0 to 2pi along the full length of the bottom pane 714.

A pixellated display device (such as display device 604) has field of view which is limited by the wavelength of light and, more importantly for the context of the present disclosure, the pixel pitch (or pixel size) of the display device. As the pixel pitch decreases, the field of view increases. The display device 604 is only able to holographic reconstruct points within said field of view (which corresponds to the maximum diffraction angle of the display device). The hologram of the first image point 610 has a very high spatial frequency because the first image point 610 is towards the edge of the point cloud 602 which, in this example, corresponds to being close to the edge of the field of view of the display device 604 and such that the propagation axis 620 passes through the display device 604 at an angle close to the diffraction limit of the display device 604. The high spatial frequency is needed to diffract light incident thereon to form a reconstructed first image point 610 close to the edge of the field of view (i.e. close to the diffraction limit of the display device 604). Conversely, the image point 610 is towards the centre of point cloud 602 and the associated wave propagates substantially normally to the display device 604. This means that the spatial frequency is relatively very low (when compared to the hologram of the first image point 610).

The inventors recognised that, when the spatial frequency of a hologram is low, the hologram can be calculated at lower resolution than the native resolution of the display device 604. In other words, a hologram of low spatial frequency could be under-sampled with only a proportion of the phase values being calculated. For example, one or more empty pixel values may exist between each phase value. The inventors have recognised that, because of the slow and smooth changing nature of the phase of such holograms, it would then be possible to accurately interpolate between the calculated phase values (without aliasing issues) to upscale the hologram to the full resolution of the display device 604. The inventors have utilised this concept in their proposed improved method of calculating a point cloud hologram to provide a counterintuitive, but computationally very efficient, method.

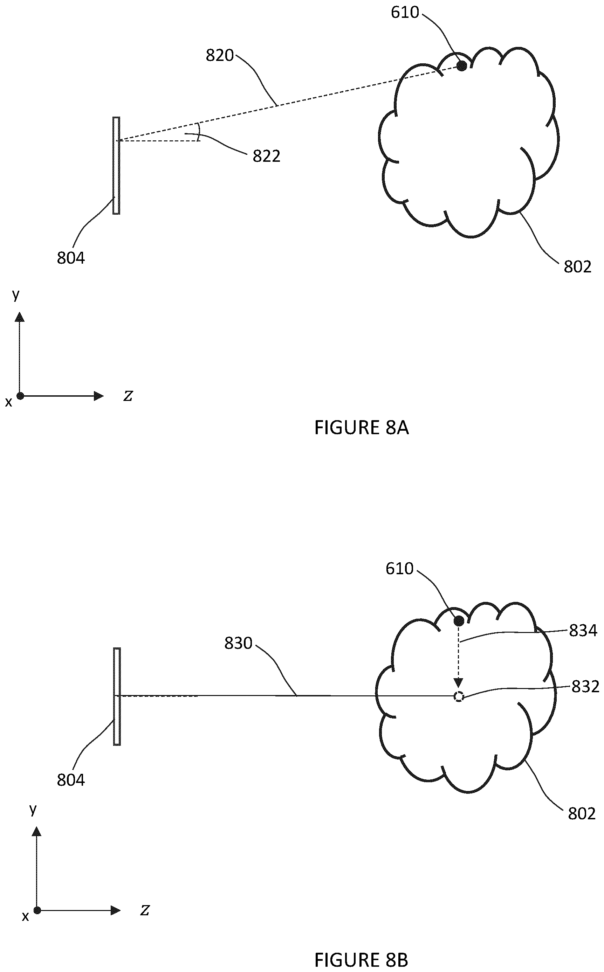

A core concept of the method according to the present disclosure is that the propagation path is modified (at least for image points having an associated high spatial frequency). In particular, instead of propagating the wave from the image point along a propagation path towards the entrance aperture (such that the propagation path makes a relatively large angle with the display device), a different propagation path is used. The actual propagation path is arranged to make a reduced angle with the display device 804. This means that the starting point of the propagation path is not the image point in the target image. Another way of describing this is that the image point is effectively moved in the target image. Figure 8A and 8B demonstrate this in relation to a single image point.

Figure 8A and 8B both represent a point cloud hologram calculation for the single image point. Figure 8A and 8B both comprise a point cloud 802 and a display device 804. The entrance pupil is not shown in Figure 8A and 8B. The point cloud of Figure 8A comprises the first image point 610 of Figure 6 which has a light-ray path 820 extending therefrom. The light-ray path 820 corresponds to the propagation path 620 of Figure 6 and, in this example, is a path which has been determined using ray tracing from the first image point 610 to the entrance aperture (not shown in Figure 8A), through the display device 804. The wave for the hologram is not propagated along the light-ray path 820. Figure 8A shows the angle 822 made by the light-ray path 820 and a normal of the display device 804. The angle 822 is exaggerated in Figure 8A. The point is that the angle is non-zero and is approaching the diffraction limit of display device 804.

Figure 8B shows the actual propagation path 830 used in the point cloud hologram calculation (rather than the light-ray path 820). The propagation path 830 is arranged to be substantially normal to the display device 804. In other words, the angle 822 has been reduced (to substantially zero). This means that the propagation path 830 does not extend from the first image point 610. Instead, the propagation path 830 has starting point 832, represented by the broken circle in Figure 8B. Once a wave has been propagated along propagation path 830, complex values and phase values are determined on the display device 604 or hologram plane in a manner which will be familiar to the skilled reader. The complex / phase values that will be calculated are effectively values for a hologram of an image point at the starting point 832 of the propagation path 830, rather than for an image point in the position of the first image point 610. Thus, it may be said that the first image point 610 is effectively moved to the starting point 832 as part of the hologram calculation method. This movement is represented by arrow 834 in Figure 8B. A hologram of an image point at the starting point 832 will have relatively very low spatial frequencies and, in fact, will appear similar to the hologram of Figure 7B.

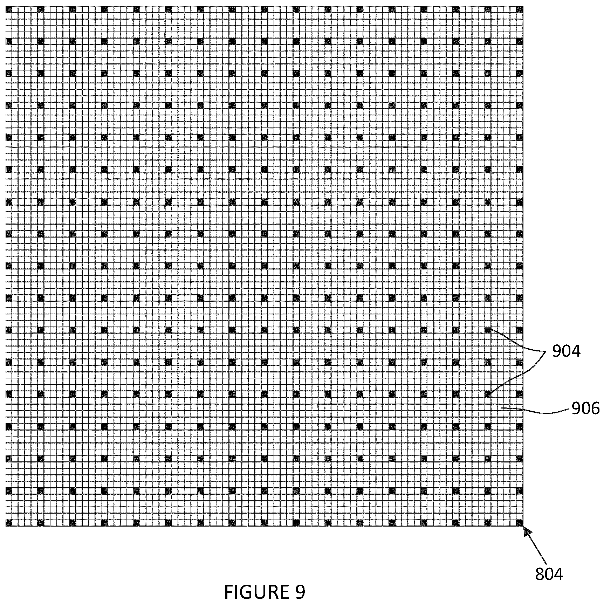

Because the hologram calculated in Figure 8B (by propagating wave along propagation path 830) has a low spatial frequency, the hologram calculation can comprise under-sampling the complex / phase values, as described above. A portion of an under-sampled hologram displayed on a the display device 804 is shown in Figure 9.

The grid of Figure 9 represents the pixels of the pixellated display device 804. Each square of the array represents a pixel. The black / filled-in squares 904 of the array represent pixels for which complex / phase values have been determined in the initial hologram calculation (following the propagation of the wave along propagation path 830). The white / empty squares 906 represent pixels for which complex / phase values have not been determined. Each black square 904 is separated from its nearest neighbour black squares by four white (empty) squares 906. Thus, Figure 9 demonstrates how under-sampling can be used to dramatically reduce the number of pixels for which complex / phase values need to be determined during the initial hologram calculation. This saves a substantial amount of compute time and results in the hologram calculation being considerably more efficient.

As above, the hologram determined in Figure 8B is of very low spatial frequency. Thus, values for the empty squares / pixels 906 can accurately be determined based on the known values in the black square 904 using interpolation. For example, a bicubic interpolation scheme can be used for the interpolation. This would not have been possible if the wave of the hologram calculation were propagated along the light-ray path 820 rather than the propagation path 830 because the high spatial frequency of such a hologram would have significant aliasing making interpolation impractical.

Without further processing, a hologram calculated as described in relation to Figure 8B and displayed on a display device and suitably illuminated would form a reconstruction of the first image point 810 substantially centrally in the field of view of the system. This is not consistent with the position of the first image point 810 in the target image which (as shown in Figure 8A and 8B) is positioned towards the edge of the point cloud 802. The inventors have recognise that the original or intended position in the point cloud 802 can be recovered by further processing the hologram to translate the reconstructed point. For example, one or grating functions or phase-ramp functions can be added to the hologram. In some examples, a first grating function may be added to the hologram to translate the reconstructed point in a first dimension (e.g. an x-direction) and a second grating function may be added to the hologram to translate the reconstructed point in a second dimension (e.g. a y-direction). The use of phase-ramp functions to translate image points will be familiar to the skilled reader. It is straightforward to select a gradient or phase-ramp function that compensates for the reduction in the angle of the propagation path 830 because the reduction in angle is already known from the hologram calculation process. Thus, phase-ramp functions the reverse / compensate for the reduction can readily be determined / selected.

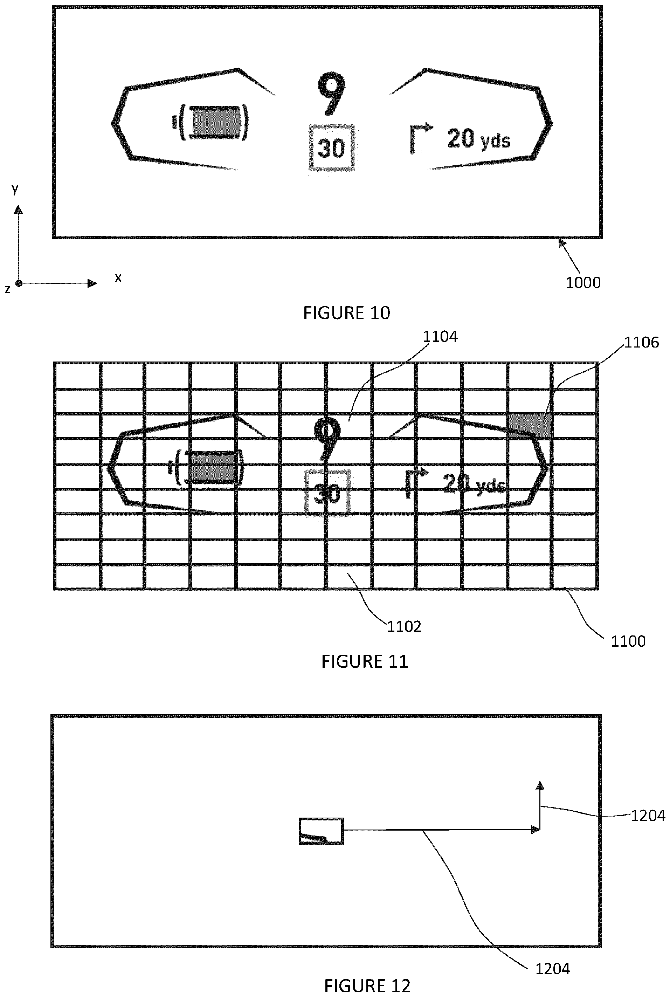

In order to further describe the improved method of calculating a hologram of a target picture, Figures 10 to 12 represent steps of the hologram calculation for a specific target picture (rather than the generic single point 610 of Figure 8B). Figure 10 shows the target picture 1000 of this example. The point cloud of Figure 6, 8A and 8B was shown in a y-z plane. This target picture 1000 of Figure 10 is instead in an x-y plane. Thus, the view of the target picture 1000 in Figure 10 is effectively a head-on view of the target picture 1000 from the point of view of the viewing sys (rather than a side on view). So, as such the target picture 1000 in Figure 10 appears two-dimensional. But, in some examples, the target picture 1000 may also have depth in the z-direction and so may be three-dimensional.

The target picture 1000 of Figure 10 is for a head-up display for a vehicle and so comprises information that is useful for a driver of a vehicle. This includes speed information, charge status of the vehicle and directional information. The target picture 1000 is a cloud of points (or point cloud). However, because the target picture 1000 is high resolution, individual image points cannot be distinguished at the scale of the target picture 1000 shown in Figure 10.

In this example, an initial step in the method for calculating the hologram comprises dividing the target picture into a plurality of portions or cells. Figure 11 shows the target picture 1000 divided into an array of cells 1100. In this example, the array of cells 1100 comprises 12 by 9 cells extending in the x and y direction. In this example, dividing the target picture into a plurality of cells comprises defining angular ranges from the viewer to the target picture (using ray tracing). It should be clear that this step is performed virtually. Neighbouring angular ranges are adjacent to one another (abutting one another) and do not overlap. In this example, each angular range is equal in extent in both the x and the y direction.

The method further comprises identifying which image points of the target picture 1000 fall into which cell. In this example, some cells (such as cell 1102) do not contain any image points. Other cells (such as cell 1104) do contain image points. Cells which do not contain any image points can be effectively ignored in the method. The image points contained in an individual cell may be referred to as a subset of image points.

In this example, the method for calculating the hologram then comprises calculating a sub-hologram for each cell (or, at least each cell that contains image points). In other words, the method comprises calculating a sub-hologram for subset of image points. The calculation of a first sub-hologram for a first cell 1106 will be described herein. The first cell 1106 in Figure 11 is shaded in grey simply to highlight the cell. As can be seen in Figure 11, the first cell 1106 comprises image points which form a portion of a shape outlining the directional information in the target picture.

Calculating or determining the first sub-hologram of a first subset of the image points contained in the first cell 1106 comprises, for each image point of the first subset, propagating a wave along a propagation path that makes an angle with the display device that is reduced relative to the angle made by the respective light-ray path and then determining a contribution of the wave at the display device for each image point of the first subset.

This is the same as what was described in relation to Figure 8B. So, instead of each propagation path starting at the location of an image point in the first cell 1106, each propagation path starts at a location closer to the centre of the target picture 1000. In this particular example, the angle of each propagation path is reduced by the same amount. The amount of the reduction is selected such that a propagation path for the central image point of the first cell 1106 has a starting point at the centre of the target picture 1000. The result of reducing the angles of the propagation paths for the image points of the first cell 1106 in this way is that the first cell 1106 is effectively moved to centre of the target picture 1000. Another way of saying this is that the first sub-hologram that is determined is a hologram of the first cell 1106 as if the first cell 1106 were located at the centre of the target picture 1000. Thus, without further processing, if the first sub-hologram were displayed on a display device and suitably illuminated, a holographic reconstruction of the first cell 1106 would be located at the centre of a field of view rather than in the location indicated in the target picture 1000. This is shown in Figure 12, which shows the content of the first cell 1106 substantially at the centre.

As has been described previously, when the propagation path used in the hologram (or sub-hologram) calculation has a reduced angle (e.g. substantially equal to zero), the hologram will have a low spatial frequency. In this example, the sub-hologram is a hologram of plurality of image points (i.e. the image points making up the first cell 1106). Thus, the sub-hologram will effectively comprise a superposition of a plurality of individual holograms of each of the individual points. The holograms of each of the individual points resembles that shown in Figure 7B (having low spatial frequency) but will vary slightly because the propagation path of each of the points will be slightly different (because the angles will be slightly different for the different points within the cell). In other words, the holograms of each of the individual points will be slowly varying and have a low spatial frequency. As the skilled reader will appreciate, the sum or superposition a plurality of slowly varying functions is also a slowly varying function. Thus, the sub-hologram of the plurality of image points of the first cell 1106 will also have a low spatial frequency. This means that the sub-hologram can be under-sampled and interpolated as described in relation to Figure 9.

Once the sub-hologram has been interpolated, two grating functions are added to the sub-hologram to compensate for the reduction in the angle of the propagation paths. In this example, a first grating function is added to the first sub-hologram to compensate for the reduction in angle in the x direction and a second grating function is added to the first sub-hologram to compensate for the reduction in angle in the y direction. The effect of the first and second grating functions on a reconstruction of the first sub-hologram (combined with the first and second grating functions) is represented by the arrows in Figure 12. In particular, a first arrow 1202 in Figure 12 represents a translation or shift caused by the first grating function and the second arrow 1204 in Figure 12 represents a translation or shift caused by the second grating function. Given that the original reduction amount (in the angle of the propagation paths during the hologram calculation) was known and was the same for all image points in the first cell 1106, it is straightforward to select first and second grating functions which compensate for this known amount. Furthermore, the first and second grating functions can be applied to the sub-hologram of the first cell 1106 as a whole (i.e. once) rather than needing to apply grating functions to image points individually.

The output of the above description is a sub-hologram of the first cell 1106 combined with one or more grating functions. It should be clear to the skilled reader that this process can be repeated for each cell (or, at least, for each cell comprising one or more image points). A sub-hologram (combined with respective grating function or functions) will be determined at each iteration. Said sub-holograms can be combined (or accumulated) to form an hologram of the full target picture. This hologram may be said to comprise the information of the sub-holograms of each of the cells in (combination with the appropriate grating functions).

### Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

## Claims

1. A hologram engine for calculating a hologram of a target picture for displaying on a display device of an optical system, the target picture comprising a plurality of image points, wherein each image point is defined by a first path therefrom to an entrance pupil of a viewer, each first path making an angle with the display device;
wherein the hologram engine is arranged to determine a first sub-hologram of a first subset of the image points of the target picture by, for each image point of the first subset:
propagating a wave along a second path that makes an angle with the display device that is reduced relative to the angle made by the respective first path; and
determining a contribution of the wave at the display device for each image point of the first subset.

2. A hologram engine as defined in claim 1, wherein the hologram engine is arranged to apply one or more grating functions to the first sub-hologram, the one or more grating functions being arranged to compensate for the reduction in angle of each second path of the image points of the first subset.

3. A hologram engine as defined in claim 1 or 2, wherein the angle made by the second path associated with each image point of the first subset and the display device is reduced by substantially the same amount.

4. A hologram engine as defined in any one of the preceding claims, wherein the second path for at least some of the image points of the first subset does not pass through the entrance pupil,
or
wherein each second path for the image points of the first subset is arranged such that the respective wave does not pass through the respective image point.

5. A hologram engine as defined in any one of the preceding claims, wherein each second path for the image points of the first subset passes through a first portion of the target picture, wherein a distance between the first portion and a centre of the target picture is less than a distance between at least one image point of the first subset and said centre.

6. A hologram engine as defined in any one of the preceding claims, wherein each second path for the image points of the first subset is arranged as if the respective image point has been moved within the target picture to be closer to a centre of the target picture.

7. A hologram engine as defined in any one of the preceding claims, wherein the reduced angle of at least one of the second paths is substantially equal to zero.

8. A hologram engine as defined in any one of the preceding claims, wherein the hologram engine is arranged to initially under-sample the first sub-hologram such that values for the first sub-hologram are initially determined for a subset of pixels of the display device with one or more non-determined pixels between each determined sub-hologram pixel,
optionally,
wherein the hologram engine is arranged to interpolate the under-sampled first sub-hologram in at least a first dimension of the display device to determine values for at least some of the non-determined values of the first sub-hologram.

9. A hologram engine as defined in any one of the preceding claims, wherein the hologram engine is arranged to divide the target picture into at least n subsets of image points, wherein n is greater than or equal to 10.

10. A hologram engine as defined in claim 9, wherein, for each of the n subsets of image points, the hologram engine is arranged to determine an nth sub-hologram for the nth subset by determining a contribution of a wave at the display device for each image point of the nth subset; wherein each wave is propagated along a second path that makes a reduced angle with the normal of the display device relative to an angle made by the respective first path.

11. A hologram engine as defined in claim 10, wherein the angle made by the second path associated with each image point within the nth subset and the display device is reduced by substantially the same amount.

12. A hologram engine as defined in claim 10 or 11, wherein the hologram engine is arranged to apply one or more grating functions to the sub-hologram of each of the n subsets, the one or more grating functions being arranged to compensate for the reduced angle of the second path for the nth subset.

13. A hologram engine as defined in any one of claims 10 to 12, wherein the amount that the angle made by each second path is reduced by is different for different subsets.

14. A hologram engine as defined in any one of claims 10 to 13, wherein the hologram engine dividing the target picture into at least n subsets of image points comprises the hologram engine dividing the target picture into a plurality of angular ranges.

15. A method of calculating a hologram of a target picture for displaying on a display device of an optical system, the target picture comprising a plurality of image points, wherein each image point is defined by a first path therefrom to an entrance pupil of a viewer, each first path making an angle with the display device, the method comprising:
determining a first sub-hologram of a first subset of the image points of the target picture;
wherein the determining of the first sub-hologram comprises, for each image point of the first subset:
propagating a wave along a second path that makes an angle with the display device that is reduced relative to the angle made by the respective first path; and
determining a contribution of the wave at the display device for each image point of the first subset.
